# EUROPEAN PATENT SPECIFICATION

(11) **EP 0 987 946 B1**
(45) Date of publication and mention of the grant of the patent: **20.11.2002**
(21) Application number: 98925853.8
(22) Date of filing: 05.06.1998
(51) Int. Cl.: A01N 47/44, C08G 73/00

(54) **BIOCIDAL ORGANIC ACID SALTS OF A POLYMERIC BIGUANIDE**
BIOZIDE ORGANISCHE-SÄURESALZE EINES POLYMEREN BIGUANIDS
SELS BIOCIDES D'UN ACIDE ORGANIQUE ET D'UN POLYMERE DE BIGUANIDE

(30) Priority: 13.06.1997 GB 9712317
(43) Date of publication of application: 29.03.2000
(73) Proprietor: Avecia Limited, Blackley, Manchester M9 8ZS (GB)
(72) Inventor: WOOLLVEN, Peter, Stirlingshire FK3 8XG (GB)
(74) Representative: Fawkes, David Melville
(86) International application number: PCT/GB98/01662
(87) International publication number: WO 98/056253

(56) References cited:
- WO-A-95/26134
- BE-A- 698 595
- GB-A- 843 676
- GB-A- 1 434 040
- DATABASE WPI Section Ch, Week 8836 Derwent Publications Ltd., London, GB; Class B04, AN 88-253361 XP002081248 & JP 63 183502 A (UENO SEIYAKU OYO KENKYUSHO KK), 22 June 1987
- DATABASE WPI Section Ch, Week 9629 Derwent Publications Ltd., London, GB; Class A96, AN 96-283427 XP002081249 & JP 08 119878 A (LION CORP), 14 May 1996

## Description

The present invention relates to organic acid salts of polymeric biguanides, to compositions thereof, and their use as an industrial biocide or in personal care applications.

Poly(hexamethylenebiguanide) (hereinafter PHMB) has found many uses as a broad spectrum bactericide in both industrial and personal care applications and is commercially available as an aqueous concentrate of its hydrochloride salt. For most applications, the use of PHMB in the form of its hydrochloride salt is eminently suitable.

GB 1434040 discloses a method for combating fungi, bacteria and viruses in crops and harvested produce by treating same with a composition comprising a polymeric biguanide such as poly(hexamethylenebiguanide) or a salt thereof.

However, there exist some applications where the presence of chloride ion can cause undesirable side effects such as corrosion of metal surfaces. GB 1,464,005 discloses that other salts of PHMB may be used as molluscicides, such as sulphate, acetate, gluconate and behenate. However, no microbiological data is recorded for such salts. Behenic acid is an aliphatic carboxylic acid containing a C₂₁-alkyl chain and falls within the group, anionic surfactants. The concentrated aqueous solution of PHMB in the form of its hydrochloride salt is clearly stated to be incompatible with anionic surfactants, alkyl sulphonates and anionic caramels as disclosed in the Product Information Notes for Vantocil IB (37-8E dated 1 June 1994) and Cosmocil CQ (37-26E dated 1 April 1994). Both Vantocil and Cosmocil are registered trade marks of Zeneca Specialties.

Bisbiguanides have also been made available commercially as water-soluble salts such as chlorhexidine (1,1'-hexamethylene bis[5-(4-chlorophenyl)-biguanide]digluconate) and alexidine (1,1'-hexamethylene bis [5-(4-(2-ethylhexyl)phenyl)-biguanide]-diacetate). These water-soluble salts and PHMB hydrochloride are not particularly suited to provide a solution of the polymeric biguanide in organic liquids, especially non-polar organic liquids.

It has now been found that PHMB in the form of its salt of an organic acid containing from 8 to 24 carbon atoms exhibits high antimicrobial, especially antibacterial activity, and that such salts exhibit increased solubility in organic media, especially organic liquids.

According to the present invention there is provided a composition comprising a carrier and a linear polymeric biguanide which has a recurring polymeric unit represented by Formula 4 in the form of its salt with an organic acid containing from 8 to 24 carbon atoms excluding acid groups, which is optionally substituted by a halogen or a hydroxy group including salts thereof 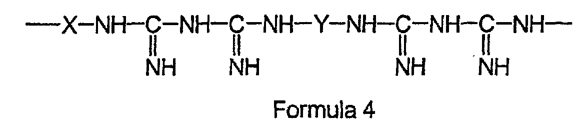 wherein X and Y may be the same or different and represent bridging groups in which together, the total number of carbon atoms directly interposed between the pairs of nitrogen atoms linked by X and Y is not less than 9 and not greater than 17.

The polymeric biguanide contains at least one biguanide unit of Formula 1.

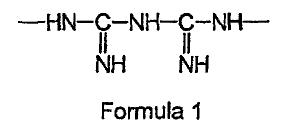

Preferably, the polymeric biguanide contains at least two biguanide units of Formula 1 which are linked by a bridging group which contains at least one methylene group. The bridging group may include a polymethylene chain which may optionally be interrupted by hetero atoms such as oxygen, sulphur or nitrogen. The bridging group may include one or more cyclic nuclei which may be saturated or unsaturated. Preferably, the bridging group is such that there are at least three, and especially at least four, carbon atoms directly interposed between two adjacent biguanide units of Formula 1. Preferably, there are not greater than ten and especially not greater than eight carbon atoms interposed between two adjacent biguanide units of Formula 1.

The polymeric biguanide may be terminated by any suitable group which may be a hydrocarbyl or substituted hydrocarbyl group or an amine or a group

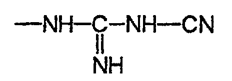

When the terminating group is a hydrocarbyl group, it may be alkyl, cycloalkyl or aralkyl.

When the terminating group is a substituted hydrocarbyl group, the substituent may be any substituent that does not exhibit an undesirable adverse effect on the microbiological properties of the polymeric biguanide. Examples of such substituents or substituted hydrocarbyl groups are aryloxy, alkoxy, acyl, acyloxy, halogen and nitrile.

When the polymeric biguanide contains two biguanide groups of Formula 1, the two biguanide units are preferably linked by a polymethylene group especially a hexamethylene group.

The polymeric biguanide preferably contains more than two biguanide units of Formula 1 and preferably is a linear polymeric biguanide which has a recurring polymeric unit represented by Formula 4 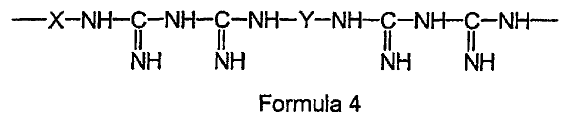 wherein X and Y may be the same or different and represent bridging groups in which, together, the total number of carbon atoms directly interposed between the pairs of nitrogen atoms linked by X and Y is not less than 9 and not greater than 17.

The bridging groups X and Y may consist of a polymethylene chain, optionally interrupted by a heteroatom such as oxygen, sulphur or nitrogen. X and Y may also incorporate a cyclic nucleus which may be saturated or unsaturated, wherein the number of carbon atoms directly interposed between the pairs of nitrogen atoms linked by X and Y is taken as including that segment of the cyclic group, or groups, which is the shortest. Thus, the number of carbon atoms directly interposed between the nitrogen atoms in the group 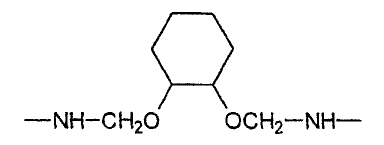 is 4 and not 8.

The preferred polymeric biguanide for use in the present invention is poly(hexamethylenebiguanide), in which both X and Y in Formula 4 are the group -(CH₂)₆-

The polymeric biguanides of Formula 4 are typically obtained as mixtures of polymers in which the polymer chains are of different lengths. Preferably, the number of individual biguanide units 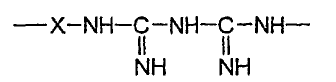 and 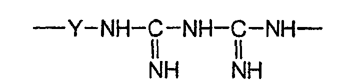 is, together, from 3 to about 80.

In the case of the preferred poly(hexamethylenebiguanide) it is a mixture represented by the compounds of Formula 5 in the free-base form. 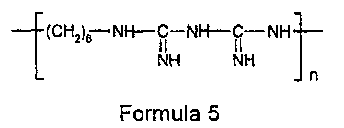 wherein the value of n is from 4 to 40 and especially from 4 to 15. It is particularly preferred that the average value of n in the mixture is 12. Preferably, the average molecular weight of the polymer mixture is from 1100 to 3300.

The organic acid which forms the salt with the polymeric biguanide may contain a phosphonic, phosphoric, sulphonic or sulphate group but preferably contains a carboxylic acid group. The organic acid may be aromatic but is preferably aliphatic, including alicyclic. When the organic acid is aliphatic, the aliphatic chain of the organic acid may be linear or branched, saturated or unsaturated, including mixtures thereof. Preferably, the aliphatic chain is linear and it is also preferred that the organic acid is an aliphatic carboxylic acid.

It is preferred that the organic acid contains not less than eight, more preferably not less than ten and especially not less than twelve carbon atoms excluding the acid group. Preferably, the organic acid contains not greater than 24, more preferably not greater than 20 and especially not greater than 18 carbon atoms excluding the acid group.

The organic acid may contain more than one acid group but it is preferred that only one such group is present.

The organic acid may be substituted by a halogen or particularly hydroxy group. It is, however, preferred that the organic acid is free from substituents.

Some aliphatic carboxylic acids are available commercially as mixtures such as those obtained from animal fats and vegetable oils and these contain both saturated and unsaturated aliphatic chains. These have also been found useful, especially the C₁₄₋₁₈-alkyl carboxylic acids and their fully saturated or hydrogenated analogues.

Examples of optionally substituted carboxylic acids are octanoic, 2-octenoic, lauric, 5-dodecenoic, myristic, pentadecanoic, palmitic, oleic, stearic, eicosanoic, heptadecanoic, palmitoleic, ricinoleic, 12-hydroxystearic, 16-hydroxyhexadecanoic, , 12-hydroxydodecanoic, 5-hydroxydodecanoic, 5-hydroxydecanoic, 4-hydroxydecanoic, dodecanedioic, undecanedioic and sebacic acids.

Particularly useful effects have been obtained when the aliphatic carboxylic acid is stearic acid and the polymeric biguanide is PHMB.

The carrier may be a solid but is preferably a liquid.

The liquid may be water whereby the composition containing the organic acid is a dispersion or emulsion. Preferably, the aqueous composition also contains a surfactant, particularly a non-ionic surfactant such as a polyalkylene oxide and especially an ethoxylate. The aqueous composition may also contain other adjuvants which help distribute the polymeric biguanide salt uniformly throughout the composition. Examples of such adjuvants are compounds which provide structure to the water to inhibit sedimentation such as alginates and gums, particularly Xanthan gum.

When the carrier is a liquid it is preferably a polar organic liquid, a substantially non-polar organic liquid or a halogenated hydrocarbon. By the term "polar" in relation to the organic liquid is meant an organic liquid or resin capable of forming moderate to strong bonds as described in the article entitled "A Three Dimensional Approach to Solubility" by Crowley et al in Journal of Paint Technology, Vol. 38, 1966, at page 269. Such organic liquids generally have a hydrogen bonding number of 5 or more as defined in the abovementioned article.

Examples of suitable polar organic liquids are amines, ethers, especially lower alkyl ethers, organic acids, esters, ketones, glycols, alcohols and amides. Numerous specific examples of such moderately strongly hydrogen bonding liquids are given in the book entitled "Compatibility and Solubility" by Ibert Mellan (published in 1968 by Noyes Development Corporation) in Table 2.14 on pages 39-40 and these liquids all fall within the scope of the term polar organic liquid as used herein.

Preferred polar organic liquids are dialkyl ketones, alkyl esters of alkane carboxylic acids and alkanols, especially such liquids containing up to, and including, a total of 6 carbon atoms. As examples of the preferred and especially preferred liquids there may be mentioned dialkyl and cycloalkyl ketones, such as acetone, methyl ethyl ketone, diethyl ketone, di-isopropyl ketone, methyl isobutyl ketone, di-isobutyl ketone, methyl isoamyl ketone, methyl n-amyl ketone and cyclohexanone; alkyl esters such as methyl acetate, ethyl acetate, isopropyl acetate, butyl acetate, ethyl formate, methyl propionate, methoxy propylacetate and ethyl butyrate; glycols and glycol esters and ethers, such as ethylene glycol, 2-ethoxyethanol, 3-methoxypropylpropanol, 3-ethoxypropylpropanol, 2-butoxyethyl acetate, 3-methoxypropyl acetate, 3-ethoxypropyl acetate and 2-ethoxyethyl acetate; alkanols such as methanol, ethanol, n-propanol, isopropanol, n-butanol and isobutanol and dialkyl and cyclic ethers such as diethyl ether and tetrahydrofuran.

The substantially non-polar, organic liquids which may be used, either alone or in admixture with the aforementioned polar liquids, are aliphatic and aromatic hydrocarbons, such as toluene and xylene; and halogenated aliphatic and aromatic hydrocarbons, such as trichloro-ethylene, perchloroethylene and chlorobenzene.

The organic acid salt of the polymeric biguanide may be made by any method known to the art but is preferably made by precipitation of the biguanide from aqueous solution by addition of the organic acid under alkaline conditions. The organic acid salts of the biguanide may be further purified by dissolution in a suitable organic liquid which is preferably immiscible with water and washing the organic phase with water to remove any residual water soluble salts.

The amount of polymeric biguanide in the composition may vary between wide limits depending on its end usage. Thus, where the composition is used to confer antimicrobial protection to a medium which is to be protected against microbiological spoilage the amount of polymeric biguanide may be just sufficient to provide such protection. Preferably the amount of biguanide is not less than 1 ppm, more preferably not less than 10 ppm and especially not less than 20 ppm. It will be appreciated that where the composition containing the salt of the polymeric biguanide is to be transported in bulk the amount of the polymeric biguanide salt is as high as possible provided that the biguanide salt remains uniformly distributed throughout the composition. Preferably, the amount of polymeric biguanide salt in the composition is not greater than 30%, more preferably not greater than 25% and especially not greater than 20% based on the total weight of the composition.

Some of the polymeric biguanides in the form of a salt with an organic acid containing from 8 to 30 carbon atoms are novel. Thus, according to a further aspect of the invention there is provided a polymeric biguanide in the form of a salt with an aliphatic carboxylic acid containing from 8 to 24 carbon atoms, particularly from 10 to 20 carbon atoms and especially from 12 to 18 carbon atoms excluding the -COOH group, optionally substituted by hydroxy.

It is particularly preferred that the aliphatic carboxylic acid is free from substituents.

The aliphatic carboxylic acid may be linear or branched, saturated or unsaturated, including mixtures thereof. It is preferred that the aliphatic carboxylic acid is linear and saturated.

It is especially preferred that the polymeric biguanide is PHMB.

As noted hereinbefore, the organic acid salts of the polymeric biguanide exhibit antimicrobial, especially antibacterial, activity. Consequently, the polymeric biguanide salts or compositions containing the polymeric biguanide salts may be used to protect various media from microbiological growth.

According to a still further aspect of the invention there is provided a method for inhibiting microbiological growth on, or in a medium which comprises treating the medium with a polymeric which has a recurring polymeric unit represented by Formula 4 in the form of its salt with an organic acid containing from 8 to 24 carbon atoms excluding acid groups which is optionally substituted by a halogen, or a hydroxy group, including salts thereof 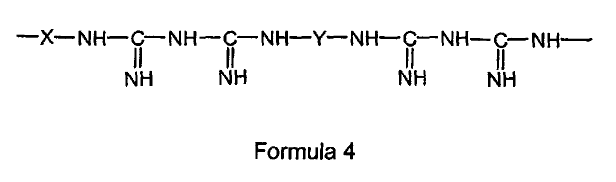 wherein X and Y may be the same or different and represent bridging groups in which together, the total number of carbon atoms directly interposed between the pairs of nitrogen atoms linked by X and Y is not less than 9 and not greater than 17.

The polymeric biguanide salt can be used in any conditions in which microorganisms grow and cause problems. Thus, the medium may be an industrial medium such as a cooling water tower liquid, paper mill liquor, metal working fluid, geological drilling lubricant, polymer emulsion, surface coating composition such as paint, varnish or lacquer. The medium to be protected can be a solid such as wood or leather and is provided by from 1 ppm to 500 ppm, particularly 10 to 200 ppm and especially 10 to 100 ppm of the polymeric biguanide salt relating to the medium.

The invention is illustrated by the following examples wherein all parts and percentages are references to weight unless indicated to the contrary.

### Example 1

### Preparation of stearate salt of PHMB

Water (150 litres) was added to a reactor vessel followed by stearic acid (14.8 Kgm, 0.047M). Sodium hydroxide flake (1.88 Kgm, 0.047M) was added with stirring, giving a pH value in the range 9.0 to 10.0. PHMB hydrochloride (50 litres as 20% aqueous solution, 0.047M, Vantocil IB ex. Zeneca) was added and the reactants stirred at 80°C for 2 hours. After cooling, the PHMB stearate salt was separated on a slurry filter, washed with water and dried.

The product was obtained as a paste containing 11.0 Kgm PHMB stearate (50% theory).

The PHMB stearate salt exhibited similar microbiological activity to the hydrochloride salt when allowance is made for the different molecular weights.

### Example 2

Palmitic acid (1.35 parts ex Aldrich) were dissolved in water (15ml) by heating to 60°C and adjusting the pH value to between 9 and 10 by adding caustic soda. PHMB hydrochloride (1 part as 20% solution, Cosmocil CQ ex Zeneca) was added and the reactants stirred at 80°C for 2 hours. The reaction mass was then cooled to 20°C whereupon the PHMB palmitate separated as a clear gum (1.86 parts).

### Examples 3 and 4

Example 2 was repeated except for replacing the palmitic acid with an equivalent amount of lauric acid and octanoic acid, respectively.

### Examples 5 to 11

The MIC values for the different salts of poly(hexamethylene biguanide) were determined by dissolving the salts in methanol/dimethylformamide (1:6). The results are given in Table 1 below and show that the different salts exhibit similar antimicrobial activity against yeast and bacteria.

**Table 1**

| Example | Anion | C.albicans | E.coli | St.aureus |
|---|---|---|---|---|
| 5 | stearate | 100 | 2.3 | 3.1 |
| 6 | palmitate | 150 | 4.7 | 4.7 |
| 7 | octanoate | >150 | 0.8 | 2.3 |
| 8 | laurate | >150 | 1.2 | 1.2 |
| 9 | chloride (D) | >150 | 0.8 | 1.2 |
| 10 | chloride (W) | >150 | 0.4 | 1.6 |
| 11 | stearate (M) | >150 | 2.3 | 3.1 |
| Foot note to Table 1 C. albicans is *Candida albicans* E. coli is *Escherichia coli* St. aureus is *Staphylococcus aureus* D. is dried sample of poly(hexamethylenebiguanide) hydrochloride W. is sample of poly(hexamethylenebiguanide)hydrochloride dissolved in water M. is sample of poly(hexamethylenebiguanide)hydrochloride dissolved in methanol. | | | | |

## Claims

1. A composition comprising a carrier and a linear polymeric biguanide which has a recurring polymeric unit represented by Formula 4 in the form of its salt with an organic acid containing from 8 to 24 carbon atoms excluding acid groups which is optionally substituted by a halogen or a hydroxy group, including salts thereof 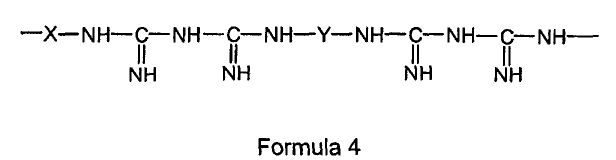 wherein X and Y may be the same or different and represent bridging groups in which together, the total number of carbon atoms directly interposed between the pairs of nitrogen atoms linked by X and Y is not less than 9 and not greater than 17.

2. A composition as claimed in claim 1 wherein both X and Y is the group -(CH₂)₆-.

3. A composition as claimed in either claim 1 or claim 2 wherein the polymeric biguanide is a mixture represented by the compounds of Formula 5 in the free-base form 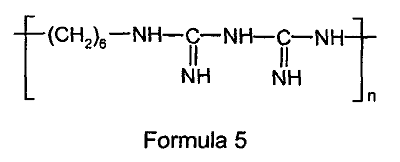 wherein n is from 4 to 40.

4. A composition as claimed in any one of claims 1 to 3 wherein the organic acid contains a carboxylic acid group.

5. A composition as claimed in any one of claims 1 to 4 wherein the organic acid contains from 12 to 18 carbon atoms.

6. A composition as claimed in any one of claims 1 to 5 wherein the organic acid is free from substituents.

7. A composition as claimed in any one of claims 1 to 4 wherein the organic acid is selected from octanoic, 2-octenoic, lauric, 5-dodecenoic, myristic, pentadecanoic, palmitic, oleic, stearic, eicosanoic, heptadecanoic, palmitoleic, ricinoleic, 12-hydroxystearic, 16-hydroxyhexadecanoic, 12-hydroxydodecanoic, 5-hydroxydodecanoic, 5-hydroxydecanoic, 4-hydroxydecanoic, dodecanedioic, undecanedioic and sebacic acids.

8. A composition as claimed in any one of claims 1 to 7 wherein the carrier is a polar organic liquid, a substantially non-polar organic liquid or a halogenated hydrocarbon.

9. A composition as claimed in claim 8 wherein the polar organic liquid is an alkanol.

10. A linear polymeric biguanide which has a recurring polymeric unit represented by Formula 4 in the form of its salt with an unsubstituted aliphatic carboxylic acid containing from 8 to 20 carbon atoms excluding the acid group 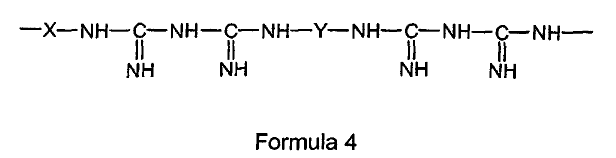 wherein X and Y may be the same or different and represent bridging groups in which together, the total number of carbon atoms directly interposed between the pairs of nitrogen atoms linked by X and Y is not less than 9 and not greater than 17.

11. The salt of a polymeric biguanide as claimed in claim 10 wherein the polymeric biguanide is a mixture represented by the compounds of Formula 5 in the free-base form 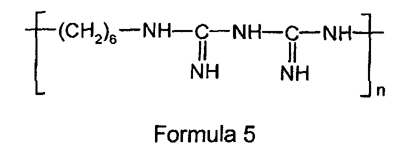 wherein n is from 4 to 40.

12. The salt of a polymeric biguanide as claimed in either claim 10 or claim 11 wherein the aliphatic acid is stearic acid.

13. A method for inhibiting microbiological growth on, or in, a medium which comprises treating the medium with a linear polymeric biguanide which has a recurring polymeric unit represented by Formula 4 in the form of its salt with an organic acid containing from 8 to 24 carbon atoms excluding acid groups which is optionally substituted by a halogen or a hydroxy group, including salts thereof 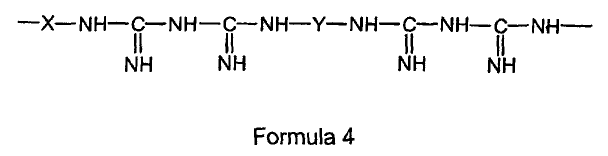 wherein X and Y may be the same or different and represent bridging groups in which together, the total number of carbon atoms directly interposed between the pairs of nitrogen atoms linked by X and Y is not less than 9 and not greater than 17.

14. A method as claimed in claim 13 wherein the linear polymeric biguanide is a mixture represented by the compounds of Formula 5 in the free-base form 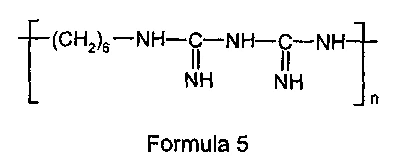 wherein n is from 4 to 40.

## Patentansprüche

1. Zusammensetzung, umfassend einen Träger und ein lineares, polymeres Biguanid mit einer wiederkehrenden Polymereinheit der Formel 4 in der Form ihres Salzes mit einer organischen Säure mit 8 bis 24 Kohlenstoffatomen unter Ausschluß von Säureresten, welche gegebenenfalls durch ein Halogenatom oder eine Hydroxygruppe substituiert ist, einschließlich Salzen davon 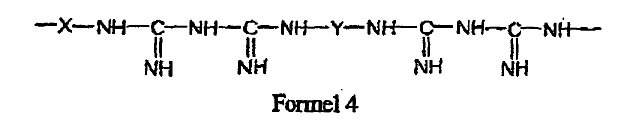 wobei X und Y gleich oder verschieden sein können und Brückenreste darstellen, in welchen zusammengenommen die Gesamtzahl der Kohlenstoffatome, die sich direkt zwischen den Stickstoffatompaaren befinden, die durch X und Y verbunden sind, nicht weniger als 9 und nicht mehr als 17 ist.

2. Zusammensetzung gemäß Anspruch 1, wobei X und Y beide die Gruppe -(CH₂)₆- sind.

3. Zusammensetzung gemäß Anspruch 1 oder Anspruch 2, wobei das polymere Biguanid ein Gemisch ist, dargestellt durch die Verbindungen der Formel 5 in Form der freien Base 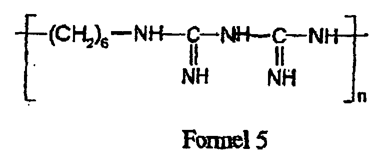 wobei n 4 bis 40 beträgt.

4. Zusammensetzung gemäß einem der Ansprüche 1 bis 3, wobei die organische Säure eine Carbonsäuregruppe enthält.

5. Zusammensetzung gemäß einem der Ansprüche 1 bis 4, wobei die organische Säure 12 bis 18 Kohlenstoffatome enthält.

6. Zusammensetzung gemäß einem der Ansprüche 1 bis 5, wobei die organische Säure frei von Substituenten ist.

7. Zusammensetzung gemäß einem der Ansprüche 1 bis 4, wobei die organische Säure ausgewählt ist aus Octan-, 2-Octen, Laurin-, 5-Dodecen-, Myristin-, Pentadecan-, Palmitin-, Öl-, Stearin-, Eikosan-, Heptadecan-, Palmitol-, Ricinol-, 12-Hydroxystearin-, 16-Hydroxyhexadecan-, 12-Hydroxydodecan-, 5-Hydroxydodecan-, 5-Hydroxydecan-, 4-Hydroxydecan-, Dodecandi-, Undecandi- und Sebacinsäure.

8. Zusammensetzung gemäß einem der Ansprüche 1 bis 7, wobei der Träger eine polare organische Flüssigkeit, eine im Wesentlichen unpolare organische Flüssigkeit oder ein halogenierter Kohlenwasserstoff ist.

9. Zusammensetzung gemäß Anspruch 8, wobei die polare organische Flüssigkeit ein Alkanol ist.

10. Lineares, polymeres Biguanid mit einer wiederkehrenden Polymereinheit der Formel 4 in der Form ihres Salzes mit einer unsubstituierten, aliphatischen Carbonsäure mit 8 bis 20 Kohlenstoffatomen unter Ausschluß des Säurerests 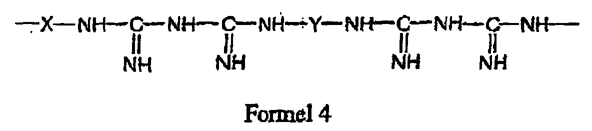 wobei X und Y gleich oder verschieden sein können und Brückenreste darstellen, in welchen zusammengenommen die Gesamtzahl der Kohlenstoffatome, die sich direkt zwischen den Stickstoffatompaaren befinden, die durch X und Y verbunden sind, nicht weniger als 9 und nicht mehr als 17 ist.

11. Salz eines polymeren Biguanids gemäß Anspruch 10, wobei das polymere Biguanid ein Gemisch ist, dargestellt durch die Verbindungen der Formel 5 in Form der freien Base 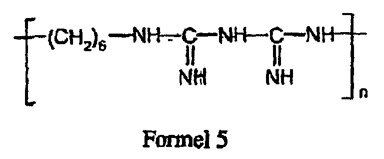 wobei n 4 bis 40 beträgt.

12. Salz eines polymeren Biguanidins gemäß Anspruch 10 oder Anspruch 11, wobei die aliphatische Säure Stearinsäure ist.

13. Verfahren zur Hemmung mikrobiologischen Wachstums auf oder in einem Medium, umfassend Behandeln des Mediums mit einem linearen, polymeren Biguanid mit einer wiederkehrenden Polymereinheit der Formel 4 in der Form ihres Salzes mit einer organischen Säure mit 8 bis 24 Kohlenstoffatomen unter Ausschluß von Säureresten, welche gegebenenfalls durch ein Halogenatom oder eine Hydroxygruppe substituiert ist, einschließlich Salzen davon 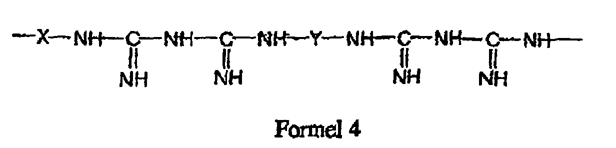 wobei X und Y gleich oder verschieden sein können und Brückenreste darstellen, in welchen zusammengenommen die Gesamtzahl der Kohlenstoffatome, die sich direkt zwischen den Stickstoffatompaaren befinden, die durch X und Y verbunden sind, nicht weniger als 9 und nicht mehr als 17 ist.

14. Verfahren gemäß Anspruch 13, wobei das lineare, polymere Biguanid ein Gemisch ist, dargestellt durch die Verbindungen der Formel 5 in Form der freien Base 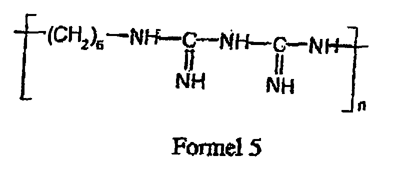 wobei n 4 bis 40 beträgt.

## Revendications

1. Composition comprenant un support et une biguanide polymère linéaire qui comporte une unité polymère récurrente représentée par la formule 4 sous forme de son sel avec un acide organique contenant entre 8 et 24 atomes de carbone à l'exclusion des groupes acides qui est facultativement substitué par un groupe halogène ou hydroxy, y compris ses sels 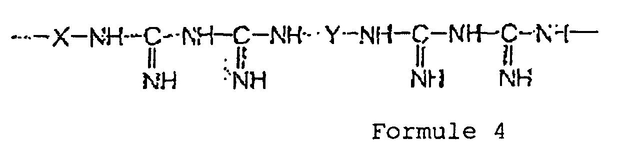 où X et Y peuvent être les mêmes ou différents et représentent des groupes de pontage dans lesquels, ensemble, le nombre total d'atomes de carbone interposés directement entre les paires d'atomes d'azote liés par X et Y n'est pas inférieur à 9 et n'est pas supérieur à 17.

2. Composition selon la revendication 1, dans laquelle à la fois Y et Y sont le groupe -(CH₂)₆₋.

3. Composition selon la revendication 1 ou la revendication 2, dans laquelle la biguanide polymère est un mélange représenté par les composés de la formule 5 sous la forme base libre 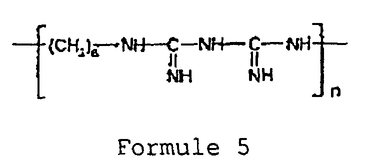 où n est compris entre 4 et 40.

4. Composition selon l'une quelconque des revendications 1 à 3, dans laquelle l'acide organique contient un groupement d'acide carboxylique.

5. Composition selon l'une quelconque des revendications 1 à 4, dans laquelle l'acide organique contient entre 12 et 18 atomes de carbone.

6. Composition selon l'une quelconque des revendications 1 à 5, dans laquelle l'acide organique est exempt de substituants.

7. Composition selon l'une quelconque des revendications 1 à 4, dans laquelle l'acide organique est sélectionné parmi les acides suivants : octanoïque, 2-octénoïque, laurique, 5-dodécénoïque, myristique, pentadécanoïque, palmitique, oléique, stéarique, eicosanoïque, heptadécanoïque, palmitoléique, ricinoléique, hydroxy-12-stéarique, hydroxy-16-hexadécanoïque, hydroxy-12-dodécanoïque, hydroxy-5-dodécanoïque, hydroxy-5-décanoïque, hydroxy-4-décanoïque, dodécanedioïque, undécanoïque et sébarique.

8. Composition selon l'une quelconque des revendications 1 à 7, dans laquelle le support est un liquide organique polaire, un liquide organique sensiblement non polaire ou un hydrocarbure halogéné.

9. Composition selon la revendication 8, dans laquelle le liquide organique polaire est un alkanol.

10. Biguanide polymère linéaire qui comporte une unité polymère récurrente représentée par la formule 4 sous forme de son sel avec un acide carboxylique aliphatique non substitué contenant entre 8 et 20 atomes de carbone à l'exclusion du groupe acide 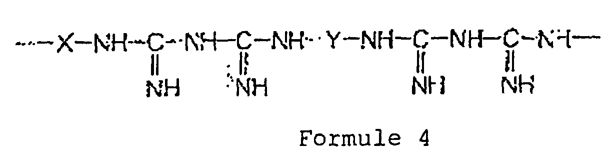 où X et Y peuvent être les mêmes ou différents et représentent des groupes de pontage dans lesquels, ensemble, le nombre total d'atomes de carbone interposés directement entre les paires d'atomes d'azote liés par X et Y n'est pas inférieur à 9 et n'est pas supérieur à 17.

11. Sel d'une biguanide polymère selon la revendication 10, dans lequel la biguanide polymère est un mélange représenté par les composés de la formule 5 sous la forme base libre 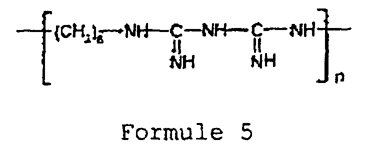 où n est compris entre 4 et 40.

12. Sel d'une biguanide polymère selon la revendication 10 ou la revendication 11, dans lequel l'acide aliphatique est l'acide stéarique.

13. Procédé pour inhiber la croissance microbiologique sur ou dans un milieu, qui comprend le traitement du milieu avec une biguanide polymère linéaire qui comporte une unité polymère récurrente représentée par la formule 4 sous forme de son sel avec un acide organique contenant entre 8 et 24 atomes de carbone à l'exclusion des groupes acides qui est facultativement substitué par un groupe halogène ou hydroxy, y compris ses sels 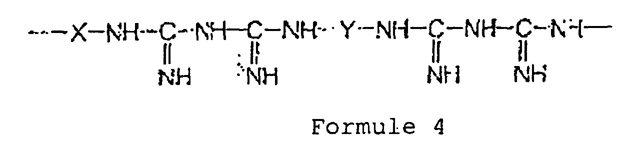 où X et Y peuvent être les mêmes ou différents et représentent des groupes de pontage dans lesquels, ensemble, le nombre total d'atomes de carbone interposés directement entre les paires d'atomes d'azote liés par X et Y n'est pas inférieur à 9 et n'est pas supérieur à 17.

14. Procédé selon la revendication 13, dans lequel la biguanide polymère linéaire est un mélange représenté par les composés de la formule 5 sous la forme base libre 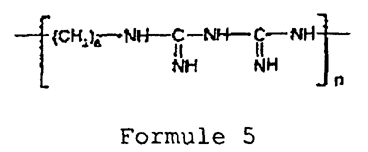 où n est compris entre 4 et 40.
